# EUROPÄISCHE PATENTSCHRIFT

(11) **EP 3 639 904 B1**
(45) Veröffentlichungstag und Bekanntmachung des Hinweises auf die Patenterteilung: **07.10.2020**
(21) Anmeldenummer: 19020573.2
(22) Anmeldetag: 14.10.2019
(51) Int. Cl.: B01D 29/11, B01D 29/76, B01D 29/94, B01D 33/76, B01D 35/16, B01D 29/60, A47J 37/12

(54) **FILTERANLAGE ZUM REINIGEN VON FLÜSSIGKEITEN**
FILTER SYSTEM FOR CLEANING LIQUIDS
INSTALLATION DE FILTRATION DESTINÉE AU NETTOYAGE DE LIQUIDES

(30) Priorität: 18.10.2018 DE 102018125870
(43) Veröffentlichungstag der Anmeldung: 22.04.2020
(73) Patentinhaber: Pfeffer, Ulrich, 73333 Gingen (DE)
(72) Erfinder: Pfeffer, Ulrich, 73333 Gingen (DE)
(74) Vertreter: Müller, Gottfried

(56) Entgegenhaltungen:
- EP-A1- 0 553 438
- EP-A1- 1 306 118
- DE-A1-102006 010 843
- DE-U1-202016 100 987

## Beschreibung

Die Erfindung bezieht sich auf eine Filteranlage zum Reinigen von Flüssigkeiten, beispielsweise zum Reinigen von Wasser aus Geothermiebohrungen. Es kommt auch eine Anwendung der Filteranlage zum Reinigen von Flüssigkeiten aus dem Lebensmittelbereich, beispielsweise von Ölen oder Fetten, in Betracht.

Die EP 3 130 386 A1 offenbart eine Filteranlage zum Reinigen von Flüssigkeiten mit einer Vorfiltereinheit zur Separierung von Partikeln aus der Flüssigkeit, einer der Vorfiltereinheit nachgeschalteten Ausschleuseeinheit zur Zwischenlagerung der Partikel und einer der Ausschleuseeinheit nachgeschalteten Kammer, in der die abgeschiedenen Partikel gesammelt und aus der die Partikel abgeführt werden.

Zum weiteren Stand der Technik, der sich auf die Reinigung von Ölen oder Fetten bezieht, wird auf die DE 10 2004 013 934 A1, DE 27 56 428 C2, EP 2 420 168 A1 und US 2002/0006460 A1 verwiesen.

Aus der US 2016/0 355 413 A1 ist eine Filteranlage mit einem Zentrifugalseparator bekannt, in dem Mikroorganismen aus einer Flüssigkeit entfernt werden können. Dem Zentrifugalseparator ist ein Flüssigkeitsbehälter zur Aufnahme der Flüssigkeit nachgeschaltet, wobei der Flüssigkeitsbehälter über ein Ventil mit einem Sammelbehälter verbunden ist, in welchem die abgeschiedenen Mikroorganismen aufgenommen werden. Diese können mithilfe einer Neutralisationseinheit, die an den Sammelbehälter angeschlossen ist, neutralisiert werden.

Der Erfindung liegt die Aufgabe zugrunde, die Sicherheit beim Reinigen von unter Druck stehenden Flüssigkeiten in einer Filteranlage zu verbessern.

Diese Aufgabe wird erfindungsgemäß mit den Merkmalen der unabhängigen Ansprüche gelöst. Die abhängigen Ansprüche geben zweckmäßige Weiterbildungen an.

Die erfindungsgemäße Filteranlage kann zum Reinigen von unter Druck stehenden Flüssigkeiten eingesetzt werden, um Partikel, die die Flüssigkeit verunreinigen, aus dieser abzuscheiden. Bei der Flüssigkeit handelt es sich beispielsweise um Wasser aus einer Geothermiebohrung, das mit verschiedenen Feststoffpartikeln versetzt ist sowie gelöste Gase aufweisen kann und üblicherweise unter einem hohen Druck steht. In Betracht kommt auch beispielhaft eine Anwendung der Filteranlage zum Reinigen von Flüssigkeiten in der Lebensmittelindustrie, beispielsweise zum Reinigen von Ölen oder Fetten, wie z.B. Frittieröl, wobei sich in der Flüssigkeit organische oder nicht-organische Partikel befinden können. Derartige Partikel können in der Filteranlage von der Flüssigkeit separiert und abgeschieden werden.

Darüber hinaus kommt auch eine Anwendung der Filteranlage zum Reinigen von kontaminierten Flüssigkeiten mit Partikeln in Betracht, wobei die Partikel chemisch oder physikalisch reaktiv sein und ggf. gesundheitsschädliche Verunreinigungen darstellen können. Es handelt es sich beispielsweise um Flüssigkeiten mit gesundheitsschädlichen, brennbaren, radioaktiven oder in sonstiger Weise schädlichen oder gefährlichen Stoffen, die in Partikelform in einer Flüssigkeit enthalten sind.

Die Filteranlage umfasst eine Vorfiltereinheit zur Separierung der Partikel aus der Flüssigkeit und eine der Vorfiltereinheit nachgeschaltete Ausschleuseeinheit zur Zwischenlagerung und Ausschleusung der Partikel. Die Vorfiltereinheit liegt vorteilhafterweise oberhalb der Ausschleuseeinheit. Vorzugsweise weisen Vorfiltereinheit und Ausschleuseeinheit eine gemeinsame Längsachse auf, die vertikal ausgerichtet ist, wobei auch Winkelabweichung von der Vertikalen von beispielsweise 10° möglich sind. Des Weiteren ist es möglich, dass Vorfiltereinheit und Ausschleuseeinheit keine gemeinsame Längsachse besitzen und beispielsweise nur eine Einheit winklig gegenüber der Vertikalen ausgerichtet ist.

Die Ausschleuseeinheit weist eine Ausschleusekammer auf, die über ein vorzugsweise obenliegendes, einstellbares Ventil von der Vorfiltereinheit separiert ist und vorteilhafterweise über ein untenliegendes, einstellbares Ventil abgeschlossen wird. Im Normalbetrieb, in welchem die Partikel separiert werden, ist das Ventil zwischen der Vorfiltereinheit und der Ausschleuseeinheit geöffnet und zugleich das untenliegende Ventil geschlossen, so dass abgeschiedene Partikel von der Vorfiltereinheit in die Ausschleuseeinheit gelangen können, welche sich vorzugsweise unterhalb der Vorfiltereinheit befindet, wobei sich die abgeschiedenen Partikel oberhalb des geschlossenen Ventils in der Ausschleuseeinheit anlagern. Sobald ein definierter Füllstand der Partikel in einer Kammer der Ausschleuseeinheit erreicht ist, wird das Ventil zwischen der Vorfiltereinheit und der Ausschleuseeinheit geschlossen, so dass die Ausschleuseeinheit von der Vorfiltereinheit separiert ist. Daraufhin kann das Medium in der Ausschleuseeinheit - eine definierte Menge an Flüssigkeit einschließlich der abgeschiedenen Partikel - unabhängig von der Flüssigkeit in der Vorfiltereinheit einer weiteren Verarbeitung unterzogen werden.

Die Vorfiltereinheit ist zum Beispiel als ein Zentrifugalseparator ausgeführt. Zusätzlich oder alternativ kann auch beispielsweise ein Spülwasser Verwendung finden.

Die erfindungsgemäße Filteranlage weist außerdem eine Dosierkammer in der Ausschleuseeinheit auf, die benachbart zur Ausschleusekammer angeordnet und mit der Ausschleusekammer strömungsverbunden ist. In die Dosierkammer mündet eine Zufuhrleitung, über die ein Neutralisationsmittel in die Dosierkammer eingeleitet werden kann. Zwischen der Ausschleusekammer und der Dosierkammer ist ein weiteres einstellbares Ventil angeordnet.

Diese Ausführung ermöglicht es, Stoffe oder Medien zu neutralisieren, die sich in der Flüssigkeit befinden und in die Ausschleuseeinheit gelangt sind. Bei derartigen Stoffen bzw. Medien handelt es sich beispielsweise um in der Flüssigkeit gelöste Gase, welche bei unter Druck stehender Flüssigkeit schlagartig verdampfen würden, sobald die Flüssigkeit ausgeleitet wird und unter Atmosphärendruck gelangt.

Die Zufuhr des Neutralisationsmittels ermöglicht es, derartige Gase chemisch in Feststoffe umzuwandeln und damit das Gas aus der Flüssigkeit zu entfernen. Wird nun die Flüssigkeit aus der Ausschleusekammer abgeleitet und gelangt unter Atmosphärendruck, so besteht keine Gefahr eines Verdampfens des Gases. Über den Kontakt mit dem Neutralisationsmittel in der Dosierkammer wird das Gas insbesondere in einem Feststoff gebunden, welcher aus der Ausschleuseeinheit entfernt werden kann.

Falls in der Flüssigkeit, insbesondere im Wasser, saure Gase enthalten sind, kann als Neutralisationsmittel eine alkalische Lösung in die Dosierkammer eingeführt werden. Umgekehrt kann im Fall von alkalischen Gasen in der Flüssigkeit als Neutralisationsmittel ein saures Mittel in die Dosierkammer eingeführt werden. In beiden Fällen wird eine Neutralisation des Gases erreicht.

Beispielsweise kann es sich bei den Gasen um Schwefelwasserstoff oder um Kohlendioxid handeln. Durch das Einbringen einer alkalischen Lösung (Lauge) als Neutralisationsmittel entsteht z.B. Natriumhydrogencarbonat.

In der Flüssigkeit kann ggf. auch ein Stoff gelöst sein, bei dem es sich nicht um ein Gas handelt, sondern beispielsweise um einen chemischen Stoff in flüssiger oder fester Form, welcher mithilfe des Neutralisationsmittels aus der Flüssigkeit entfernt wird. Auch in diesem Fall geht durch die Beigabe des Neutralisationsmittels in die Dosierkammer der Stoff eine chemische oder physikalische Reaktion ein und wird in eine weniger kritische Form umgewandelt.

Das einstellbare Ventil zwischen der Ausschleusekammer und der Dosierkammer, welches sich vorzugsweise unterhalb oder gegebenenfalls neben oder schräg oberhalb der Ausschleusekammer befindet, ermöglicht das drucklose Einleiten des Neutralisationsmittels in die Dosierkammer zu einem definierten Zeitpunkt. Es kann insbesondere zweckmäßig sein, das Ventil zwischen der Ausschleusekammer und der Dosierkammer erst dann zu öffnen und einen Übertritt der Flüssigkeit in die Dosierkammer zu ermöglichen, nachdem das Neutralisationsmittel in die Dosierkammer eingeführt worden ist. Nach dem Öffnen des Ventils strömt die Flüssigkeit - bei einer Anordnung der Dosierkammer unterhalb der Ausschleusekammer - in die Dosierkammer und vermischt sich mit dem Neutralisationsmittel. Die Ausschleusekammer und die Dosierkammer bilden bei geöffnetem Ventil eine gemeinsame Misch- oder Reaktionskammer. Es ist eine gute Durchmischung von Flüssigkeit und Neutralisationsmittel gewährleistet, so dass ein hoher Grad an Neutralisierung des Stoffes bzw. Mediums in der Flüssigkeit sichergestellt ist.

Bei einer Anordnung der Dosierkammer neben oder oberhalb der Ausschleusekammer strömt mit dem Öffnen des zwischenliegenden Ventils das Neutralisationsmittel in die Ausschleusekammer. Auch in dieser Anordnung ist eine gute Durchmischung von Flüssigkeit und Neutralisationsmittel gewährleistet.

Es kommen verschiedene Größenverhältnisse zwischen Ausschleuse- und Dosierkammer in Betracht. Beispielsweise kann es zweckmäßig sein, dass die Ausschleusekammer ein größeres Volumen als Dosierkammer aufweist.

In der Zulaufleitung, welche in die Dosierkammer mündet, ist ein Verschlussventil zum Einleiten des Neutralisationsmittels angeordnet. Das Verschlussventil kann ggf. ebenso wie das Ventil zwischen der Ausschleusekammer und der Dosierkammer über einen Aktuator zwischen einer Schließ- und einer Öffnungsstellung schaltbar ausgebildet sein. Gegebenenfalls kann ein oder können mehrere Sensoren, insbesondere Füllstandssensoren, vorhanden sein, die Sensorsignale über den aktuellen Füllstand der abgeschiedenen Partikel in der Ausschleusekammer bzw. des Neutralisationsmittels in der Dosierkammer liefern.

Gemäß einer weiteren vorteilhaften Ausführung ist der Dosierkammer ein einstellbares Ventil nachgeschaltet. Dieses Ventil, das entweder manuell oder über einen Aktuator schaltbar ist, ermöglicht nach dem Durchführen der Neutralisation die Ableitung der Flüssigkeit aus der Dosierkammer. Während des Neutralisationsvorgangs befindet sich dieses Ventil in der Schließstellung. Im Anschluss an den Neutralisationsvorgang wird dieses Ventil geöffnet.

Gemäß noch einer weiteren vorteilhaften Ausführung ist dem Ventil zwischen der Ausschleusekammer und der Dosierkammer ein manuell schaltbares Sicherheitsventil vorgeschaltet. Hierdurch ist sichergestellt, dass auch bei einem Ausfall des insbesondere über einen Aktuator betätigbaren Ventils der Strömungskreislauf der Flüssigkeit in der Vorfiltereinheit von der Ausschleuseeinheit separiert werden kann.

Bei dem Neutralisationsmittel handelt es sich vorzugsweise um ein Mittel in flüssiger Form, wobei auch feste oder gasförmige Mittel in Betracht kommen.

Zumindest der Ausschleusekammer ist eine Kühlungseinheit zugeordnet. Über die Kühlungseinheit kann die Temperatur der Flüssigkeit in der Ausschleusekammer unter einen kritischen Wert abgesenkt werden, insbesondere unter die Siedetemperatur der Flüssigkeit, beispielsweise im Fall von Wasser unter 100 °C. Dies hat den Vorteil, dass mit dem Ausleiten der Flüssigkeit aus der Ausschleusekammer und dem Kontakt der Flüssigkeit mit der umgebenden Atmosphäre kein Verdampfungsprozess einsetzt.

Gegebenenfalls kann sich die Kühlungseinheit nicht nur über die Ausschleusekammer, sondern auch über weitere Bauteile der Ausschleuseeinheit erstrecken, insbesondere über die Dosierkammer.

In der Kühlungseinheit kann zur Kühlung ein Kühlmittel vorhanden sein, beispielsweise Kühlwasser oder ein sonstiges flüssiges Kühlmittel oder gegebenenfalls auch ein kühlendes Gas verwendet werden, insbesondere Luft. Es ist auch möglich, die Kühlung passiv über die Umgebungsluft auszuführen.

Ein weiterer Aspekt der Erfindung bezieht sich auf ein Verfahren zum Betrieb der vorbeschriebenen Filteranlage zur Durchführung der Neutralisation. Hierbei wird bei geschlossenem Ventil zwischen der Ausschleusekammer und der Dosierkammer ein Neutralisationsmittel in die Dosierkammer eingeleitet und anschließend das Ventil zwischen Ausschleusekammer und Dosierkammer geöffnet, um die Flüssigkeit aus der Ausschleusekammer in die Dosierkammer zu leiten, woraufhin über den Kontakt der Flüssigkeit mit dem Neutralisationsmittel das in der Flüssigkeit gelöste Gas neutralisiert wird. Mit dieser Vorgehensweise ist eine gute Durchmischung der in die Dosierkammer geleiteten Flüssigkeit mit dem darin bereits enthaltenen Neutralisationsmittel gewährleistet, wodurch ein hoher Neutralisierungsgrad sichergestellt ist und das in der Flüssigkeit gelöst Gas entfernt werden kann.

Alternativ zu einem in der Flüssigkeit gelösten Gas kann ggf. auch ein sonstiges Medium bzw. ein sonstiger Stoff neutralisiert werden, insbesondere ein in fester oder flüssiger Form in der Flüssigkeit vorhandener Stoff, beispielsweise ein Schadstoff.

Im Anschluss an die Neutralisation des Gases bzw. des Stoffes wird die Flüssigkeit einschließlich der Feststoffpartikel, welche in der Vorfiltereinheit abgeschieden werden, aus der Dosierkammer abgeleitet.

Gemäß einer weiteren vorteilhaften Ausführung wird in regelmäßigen Abständen ein Spülvorgang durchgeführt, bei dem die Ausschleusekammer und die Dosierkammer mit einem Spülmittel gespült werden. Dieses Spülmittel wird insbesondere über die Zulaufleitung in die Dosierkammer eingeführt.

Bei dem Spülmittel zur Reinigung der Misch- bzw. Reaktionskammer - Ausschleusekammer und Dosierkammer mit geöffnetem zwischenliegenden Ventil - handelt es sich beispielhaft um Wasser, eine Säure oder eine Lauge. Das Spülmittel kann über ein Spülventil radial zur Längsachse oder auch tangential in die Misch- bzw. Reaktionskammer eingeführt werden, um möglichst viel Kontakt mit der innenliegenden Wandung zu gewährleisten.

Es kann gegebenenfalls vorteilhaft sein, ein separates, oberhalb der Ausschleusekammer oder auch schräg oder seitlich angebrachtes Spülventil vorzusehen.

Als Spülvorrichtung kann auch eine bewegliche Spüllanze mit Hochdruckdüsen zum Einsatz kommen, die von unten, insbesondere über ein unteres Anschlussstück, durch die geöffneten Ventile in die Misch- bzw. Reaktionskammer eingeführt wird.

Gemäß noch einer weiteren vorteilhaften Ausführung wird die Flüssigkeit in der Ausschleusekammer vor dem Ausleiten so lange gekühlt, bis die Flüssigkeitstemperatur unter einen Temperaturgrenzwert abgesunken ist, insbesondere unter die Siedetemperatur.

Weitere Vorteile und zweckmäßige Ausführungen sind den weiteren Ansprüchen, der Figurenbeschreibung und den Zeichnungen zu entnehmen. Es zeigen:
- Fig. 1: in perspektivischer Ansicht eine Filteranlage zum Reinigen von Flüssigkeiten, die mit Partikeln kontaminiert ist, mit einer oben liegenden Vorfiltereinheit, einer unten angeordneten Sammelkammer und einer zwischenliegenden Ausschleuseeinheit,
- Fig. 2: die Filteranlage in einer ersten Seitenansicht,
- Fig. 3: die Filteranlage in einer zweiten Seitenansicht,
- Fig. 4: die Ausschleuseeinheit in Seitenansicht.

In den Figuren sind gleiche Bauteile mit gleichen Bezugszeichen versehen.

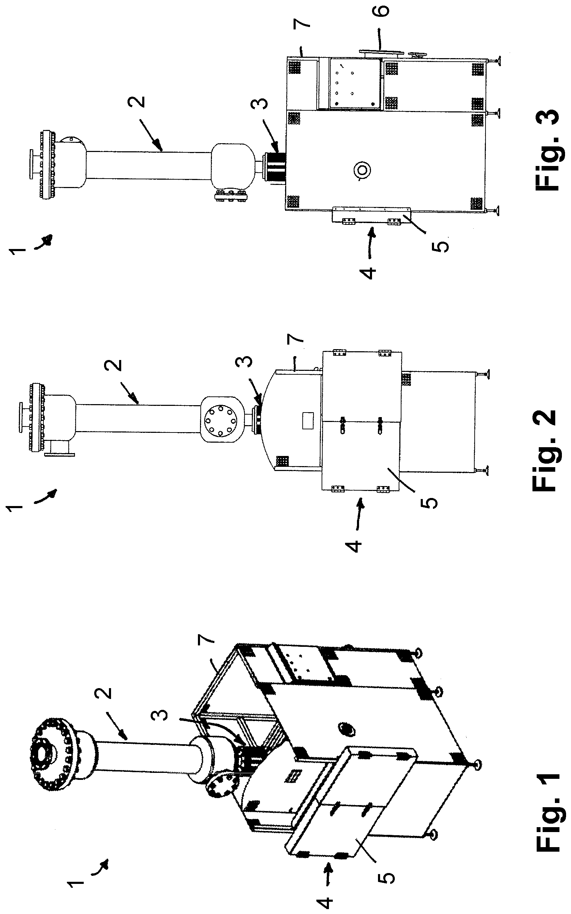

In den Fig. 1 und 3 ist eine Filteranlage 1 dargestellt, die zum Reinigen von Flüssigkeiten eingesetzt werden kann, das mit Partikeln kontaminiert ist. In der Filteranlage 1 können die Partikel aus der Flüssigkeit abgeschieden bzw. ausfiltriert und aus der Filteranlage abgeleitet werden; die gereinigte Flüssigkeit kann wieder einem Produktionsprozess zugeführt werden. Die Filteranlage 1 kann zum Reinigen von insbesondere unter Druck stehenden Flüssigkeiten eingesetzt werden, beispielsweise zum Reinigen von Wasser, das zum Beispiel aus einer Geothermiebohrung stammt. Verunreinigungen in der Flüssigkeit werden als Partikel in der Filteranlage 1 abgeschieden.

Die Filteranlage 1 kann auch zum Beispiel zum Reinigen von Flüssigkeiten eingesetzt werden, die im Lebensmittelbereich verwendet werden, zum Beispiel zum Reinigen von Frittieröl, das mit Krümeln aus dem Frittierprozess verunreinigt ist. Die Krümel werden als Partikel in der Filteranlage 1 abgeschieden.

Die Filteranlage 1 umfasst eine Vorfiltereinheit 2, eine Ausschleuseeinheit 3 und eine Sammelkammer 4. Die Vorfiltereinheit 2 ist mit der Ausschleuseeinheit 3 und diese mit der Sammelkammer 4 verbunden. Die zu reinigende Flüssigkeit wird zunächst in die Vorfiltereinheit 2 geführt, in der die Partikel aus der Flüssigkeit abgeschieden werden. Die Vorfiltereinheit 2 ist als ein Zentrifugalseparator ausgebildet, in welchem sich die Partikel am Boden der Vorfiltereinheit 2 anlagern. Die Vorfiltereinheit 2 ist zylindrisch ausgebildet, ihre Längsachse verläuft in Vertikalrichtung. Die Vorfiltereinheit 2 liegt oben, die Ausschleuseeinheit 3 unterhalb der Vorfiltereinheit 2 und die Sammelkammer 4 unterhalb der Ausschleuseeinheit 3.

Am Boden der Vorfiltereinheit 2 befindet sich die Ausschleuseeinheit 3, die die Verbindung zu der unten stehenden Sammelkammer 4 herstellt. In der Ausschleuseeinheit 3 werden abgeschiedene Partikel aus der Vorfiltereinheit 2 zwischengelagert, bis ein definierter Füllstand in der Ausschleuseeinheit 3 erreicht ist. Daraufhin werden die Partikel aus der Ausschleuseeinheit 3 in die darunter liegende Sammelkammer 4 abgelassen.

An der Sammelkammer 4 ist eine Sicherheitstür 5 angeordnet, die nur geöffnet werden kann, wenn sicherheitsrelevante Kriterien erfüllt sind. Die Sammelkammer 4 ist als Druckkammer ausgebildet und in der Lage, bei geschlossener Sicherheitstür 5 einen definierten Überdruck aufzunehmen. Die Sicherheitstür 5 kann nur geöffnet werden, wenn der Druck in der Sammelkammer 4 unterhalb eines Druckgrenzwertes liegt.

Die Sammelkammer 4 kann gegebenenfalls auch drucklos ausgeführt sein, beispielsweise als ein offener Tank mit oder ohne Entlüftung.

Auf der der Sicherheitstür 5 gegenüberliegenden Seite ist die Sammelkammer 4 mit einem Rohranschlussstutzen 6 versehen, an den ein Ablaufrohr mit einem Überdruckventil angeschlossen werden kann. Für den Fall eines unzulässig hohen Druckanstiegs in der Sammelkammer 4 öffnet das Überdruckventil, so dass der Überdruck über den Rohranschlussstutzen 6 und das angeschlossene Ablaufrohr mit dem Überdruckventil abgebaut werden kann. Beispielsweise für den Fall eines Flüssigkeitseinbruchs über die Ausschleuseeinheit 3 in die Sammelkammer 4 kann die Flüssigkeit über das Ablaufrohr wieder in den Funktionskreislauf oder ein Sammelbecken zurückgeführt werden.

Die Sammelkammer 4 befindet sich in einem Gestell 7, das Träger der Sammelkammer sowie der weiteren Einheiten der Filteranlage 1 ist, also der Vorfiltereinheit 2 und der Ausschleuseeinheit 3.

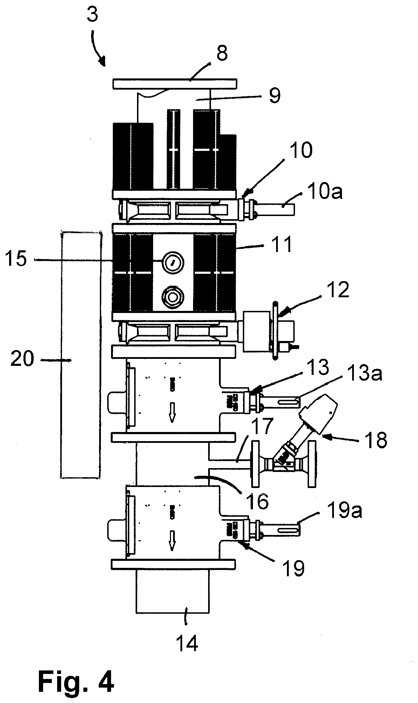

Wie Fig. 4 zu entnehmen, ist die Ausschleuseeinheit 3 näherungsweise zylindrisch mit vertikaler Längsachse ausgebildet. Die Ausschleuseeinheit 3 umfasst von oben nach unten ein oben liegendes Anschlussstück 8 für den Anschluss an die Vorfiltereinheit 2, ein Reservoir 9 mit Kühlrippen, ein erstes, oben liegendes Ventil 10, ein Partikelsammelvolumen bzw. eine Ausschleusekammer 11, ein manuelles Ventil 12, ein zweites, darunter liegendes Ventil 13, eine Dosierkammer 16 mit einer darin einmündenden Zulaufleitung 17 und einem in der Zulaufleitung 17 angeordneten Verschlussventil 18, ein unterhalb der Dosierkammer 16 angeordnetes Ventil 19 sowie ein unteres Anschlussstück 14 für die Verbindung zur Sammelkammer.

Die Ausschleusekammer 11, die beispielsweise als ein Partikelsammelrohr ausgebildet ist, ist mit einem Füllstandsensor 15 versehen, um den aktuellen Füllstand abgeschiedener Partikel in der Ausschleusekammer 11 feststellen zu können. Erreicht der Füllstand einen vordefinierten Grenzwert, so kann ein Signal erzeugt werden, um die Ventile 10 und 13 über Aktuatoren selbsttätig zu schalten. Auf diese Weise kann die Ausschleusekammer 11 regelmäßig in die darunter liegende Dosierkammer 16 entleert werden. In der Ausschleusekammer 11 können gegebenenfalls weitere Sensoren angeordnet sein, beispielsweise Druck- und/oder Temperatursensoren zur Messung des aktuellen Drucks bzw. der Temperatur im Inneren der Ausschleuseeinheit 3.

Das erste Ventil 10, das zweite Ventil 13 und das weitere Ventil 19 unterhalb der Dosierkammer 16 sind jeweils über einen Aktuator betätigbar ausgebildet. Auch das Verschlussventil 18 kann über einen Aktuator betätigbar und gegebenenfalls einzelwirkend, doppeltwirkend oder federkraftschließend ausgebildet sein. An das Verschlussventil 18 schließt sich eine Dosierpumpe zur Mengenregulierung an.

Die Ventile 10, 13 und 19 weisen Achsen 10a, 13a bzw. 19a auf, an denen jeweils ein Aktuator zur Verstellung des betreffenden Ventils zwischen einer Schließposition und einer Öffnungsposition angreift. Der Aktuator ist jeweils elektrisch, hydraulisch oder pneumatisch ausgeführt. Jedes Ventil 10, 13, 18, 19 ist unabhängig von den anderen Ventilen einstellbar.

Das weitere Ventil 12, welches das dritte Ventil in der Ausschleuseeinheit 3 bildet, ist manuell betätigbar ausgeführt und kann über einen Betätigungshebel 12a zwischen Öffnungs- und Schließposition verstellt werden. Die Ausschleusekammer 11 erstreckt sich von dem unteren bzw. zweiten Ventil 13 über das darüber liegende manuelle Ventil 12 hinaus zumindest bis zu dem ersten oben liegenden Ventil 10; gegebenenfalls kann auch das Reservoir 9, welches oberhalb des ersten Ventils 10 liegt, zur Ausschleusekammer 11 gehören.

Im Abscheidebetrieb werden in der Vorfiltereinheit 2, die vorzugsweise als Zyklon- bzw. Zentrifugalseparator ausgebildet ist, Partikel aus der zu reinigenden Flüssigkeit abgeschieden und über das Anschlussstück 8 über das geöffnete erste Ventil 10 und das geöffnete manuelle Ventil 12 in die Ausschleusekammer 11 in der Ausschleuseeinheit 3 geleitet. Das untere, zweite Ventil 13 befindet sich in der Schließstellung, so dass der Übergang zu der darunter liegender Sammelkammer 4 verschlossen ist.

Sobald ein definierter Füllstand in der Ausschleusekammer 11 erreicht ist, werden die Ventile 10 und 13 vorzugsweise selbsttätig angesteuert und in ihre entgegengesetzte Position verstellt. Dementsprechend wird das oben liegende, erste Ventil 10 geschlossen und das unten liegende, zweite Ventil 13 geöffnet, so dass sich die Ausschleusekammer 11 nach unten in die Dosierkammer 16 entleeren kann. Das mittlere, manuelle Ventil 12 bleibt geöffnet.

In die Dosierkammer 16 kann über die Zulaufleitung 17 und das Verschlussventil 18 ein Neutralisationsmittel eingeleitet werden. Dies erfolgt insbesondere, bevor der Inhalt der Ausschleusekammer 11 in die Dosierkammer 16 einströmt. Das Neutralisationsmittel in der Dosierkammer 16 vermischt sich mit der einströmenden Flüssigkeit aus der Ausschleusekammer 11 und neutralisiert in der Flüssigkeit gelöste Gase. In einer chemischen Reaktion reagiert das Neutralisationsmittel mit den gelösten Gasen in der Flüssigkeit und wird vorzugsweise in Form eines Feststoffes abgeschieden. Das Neutralisationsmittel ist im Fall eines sauren Gases eine alkalische Lösung und umgekehrt im Fall eines alkalischen Gases ein saures Mittel.

Alternativ zu einem gelösten Gas kann auch ein sonstiger Stoff in der Flüssigkeit mithilfe des Neutralisationsmittels neutralisiert werden, beispielsweise ein chemischer Schadstoff, der in flüssiger oder fester Form in der Flüssigkeit vorliegt.

Insbesondere im Fall eines in der Flüssigkeit gelösten Gases kann mit dem Ausleiten der Flüssigkeit aus der Dosierkammer in die Sammelkammer 4 (Fig. 1 bis 3) ein Verdampfungsprozess bei unter Druck stehender Flüssigkeit vermieden werden. Ohne die Neutralisation des Gases würde dieses bei Kontakt mit der Atmosphäre aufgrund des Überdrucks, unter dem die Flüssigkeit steht, schlagartig verdampfen. Indem mithilfe des Neutralisationsmittels das Gas aus der Flüssigkeit entfernt wird, wird eine derartige Reaktion beim Ausleiten der Flüssigkeit vermieden. Damit ist es auch möglich, gefahrlos die abgeschiedenen Partikel gemeinsam mit dem Flüssigkeitsvolumen, das sich zunächst in der Ausschleusekammer 11 und anschließend in der Dosierkammer 16 befindet, abzuführen.

Der Ausschleusekammer 11 ist außerdem eine Kühlungseinheit 20 zugeordnet, über die die Flüssigkeit, welche sich in der Ausschleusekammer 11 befindet, gekühlt wird. Hierdurch ist es insbesondere möglich, die Flüssigkeit unter den Siedepunkt bei Atmosphärenbedingungen abzukühlen, also beispielsweise im Fall von Wasser unter die Temperatur von 100 °C. Gelangt die gekühlte Flüssigkeit aus der Ausschleusekammer 11 in die Dosierkammer 16 bzw. die Sammelkammer unter Atmosphärenbedingungen, wird ein Verdampfen der Flüssigkeit vermieden.

Die Kühlungseinheit 20 kann sich, wie in Fig. 4 angedeutet, zusätzlich über die Dosierkammer 16 und ggf. auch über das Reservoir 9 erstrecken.

Während des Neutralisierungsprozesses in der Dosierkammer 16 ist das darunterliegende Ventil 19 geschlossen. Das Ableiten der neutralisierten Flüssigkeit aus der Dosierkammer 16 in Richtung der Sammelkammer 4 erfolgt durch Öffnen des Ventils 19, woraufhin sich der Inhalt der Dosierkammer 16 nach unten entleert.

Nachdem sämtliche Partikel einschließlich der Flüssigkeit in die Sammelkammer 4 geströmt sind, werden die Ventile 10, 13 und 19 erneut angesteuert. Die Ventile 13 und 19 werden geschlossen und das oben liegende Ventil 10 wird wieder geöffnet, so dass erneut Partikel aus der vorgeschalteten Vorfiltereinheit in die Ausschleusekammer 11 gelangen können.

Für den Fall, dass die Sammelkammer 4 entleert werden soll, werden aus Sicherheitsgründen sämtliche Ventile 10, 12, 13 und 19 geschlossen. Die automatisch betätigbaren Ventile 10, 13 und 19 werden über eine entsprechende Ansteuerung ihrer Aktuatoren in die Schließposition versetzt, das mittlere, dritte Ventil 12 wird manuell geschlossen. Über Sensoren kann der aktuelle Zustand der Ventile 10, 12, 13 und 19 überwacht, insbesondere die Schließposition der Ventile detektiert werden. Erst wenn sämtliche Ventile 10, 12, 13 und 19 geschlossen sind, lässt sich vorteilhafterweise die Sicherheitstür 5 der Sammelkammer 4 öffnen.

Über die Zulaufleitung 17 und das Verschlussventil 18 kann auch ein Spülvorgang in der Ausschleuseeinheit 3 durchgeführt werden. Hierzu wird über die Zulaufleitung 17 und das Verschlussventil 18 ein Spülmittel in die Dosierkammer 16 eingeleitet, um Ablagerungen und Anhaftungen, welche sich in der Flüssigkeit befinden, zu lösen und zu entfernen.

Es kann zweckmäßig sein, die Ventile sowie die Innenwände in der Ausschleuseeinheit 3 mit einer reibungsreduzierenden Beschichtung zu versehen, die das Anhaften und Ablagern von Stoffen erschwert.

## Patentansprüche

1. Filteranlage zum Reinigen von Flüssigkeiten, mit einer Vorfiltereinheit (2) zur Separierung von Partikeln aus der Flüssigkeit und mit einer der Vorfiltereinheit (2) nachgeschalteten Ausschleuseeinheit (3) zur Zwischenlagerung und Ausschleusung der Partikel, wobei die Ausschleuseeinheit (3) eine Ausschleusekammer (11) aufweist, die über ein einstellbares Ventil (10) von der Vorfiltereinheit (2) separiert ist,
**dadurch gekennzeichnet,**
**dass** die Ausschleuseeinheit (3) eine Dosierkammer (16) aufweist, in die eine Zulaufleitung (17) für die Zufuhr eines Neutralisationsmittels mündet, wobei zwischen der Ausschleusekammer (11) und der Dosierkammer (16) ein einstellbares Ventil (13) angeordnet ist, dass in der Zulaufleitung (17), welche in die Dosierkammer (16) mündet, ein Verschlussventil (18) zum Einleiten des Neutralisationsmittels angeordnet ist, dass die Bauteile der Ausschleuseeinheit (3) eine Beschichtung zur Reduzierung von Anhaftungen wie beispielsweise von Salzen aufweist und dass zumindest der Ausschleusekammer (11) eine Kühlungseinheit (20) zugeordnet ist.

2. Filteranlage nach Anspruch 1,
**dadurch gekennzeichnet,**
**dass** der Dosierkammer (16) ein einstellbares Ventil (19) nachgeschaltet ist.

3. Filteranlage nach Anspruch 1 oder 2,
**dadurch gekennzeichnet,**
**dass** ein oder mehrere Ventile (13, 18) über einen Aktuator zwischen einer Schließ- und einer Öffnungsstellung schaltbar sind.

4. Filteranlage nach einem der Ansprüche 1 bis 3,
**dadurch gekennzeichnet,**
**dass** dem Ventil (13) zwischen der Ausschleusekammer (11) und der Dosierkammer (16) ein manuell schaltbares Sicherheitsventil (12) vorgeschaltet ist.

5. Verfahren zum Betrieb der Filteranlage nach einem der Ansprüche 1 bis 4, bei dem bei geschlossenem Ventil (13) zwischen der Ausschleusekammer (11) und der Dosierkammer (16) ein Neutralisationsmittel in die Dosierkammer eingeleitet wird und anschließend das Ventil (13) zwischen der Ausschleusekammer (11) und der Dosierkammer (16) geöffnet wird, um die Flüssigkeit aus der Ausschleusekammer (11) in die Dosierkammer (16) zu leiten und über den Kontakt mit dem Neutralisationsmittel ein in der Flüssigkeit gelöstes Gas bzw. einen in der Flüssigkeit gelösten Stoff zu neutralisieren.

6. Verfahren nach Anspruch 5,
**dadurch gekennzeichnet,**
**dass** im Anschluss an die Neutralisation des Gases bzw. Stoffes die Flüssigkeit einschließlich abgeschiedener Feststoffpartikel aus der Dosierkammer (16) abgeleitet werden.

7. Verfahren nach Anspruch 5 oder 6,
**dadurch gekennzeichnet,**
**dass** die Ausschleusekammer (11) und die Dosierkammer (16) in regelmäßigen Abständen über die in die Dosierkammer (16) mündende Zulaufleitung (17) mit einem Spülmittel gespült werden.

## Claims

1. Filter system for cleaning liquids, with a pre-filter unit (2) for separating particles from the liquid and with a discharge unit (3) connected downstream of the pre-filter unit (2) for intermediate storage and discharge of the particles, wherein the discharge unit (3) has a discharge chamber (11) which is separated from the pre-filter unit (2) by means of an adjustable valve (10),
**characterized in that** the discharge unit (3) has a metering chamber (16) into which a feed line (17) for the supply of a neutralizing agent opens out, an adjustable valve (13) being arranged between the discharge chamber (11) and the metering chamber (16), **in that** in the feed line (17) which opens out into the metering chamber (16) a closing valve (18) is arranged for introducing the neutralizing agent, **in that** the components of the discharge unit (3) have a coating for reducing adhesions such as salts, and **in that** a cooling unit (20) is associated at least with the discharge chamber (11).

2. Filter system according to claim 1,
**characterized in that** an adjustable valve (19) is connected downstream of the metering chamber (16).

3. Filter system according to claim 1 or 2,
**characterized in that** one or more valves (13, 18) can be switched between a closed and an open position via an actuator.

4. Filter system according to any one of claims 1 to 3,
**characterized in that** a manually switchable safety valve (12) is connected upstream of the valve (13) between the discharge chamber (11) and the metering chamber (16).

5. Method of operating the filter system according to any one of claims 1 to 4, in which, when the valve (13) between the discharge chamber (11) and the metering chamber (16) is closed, a neutralising agent is introduced into the metering chamber and then the valve (13) between the discharge chamber (11) and the metering chamber (16) is opened in order to conduct the liquid from the discharge chamber (11) into the metering chamber (16) and, via contact with the neutralising agent, to neutralise a gas or a substance dissolved in the liquid.

6. Method according to claim 5,
**characterized in that**, following neutralisation of the gas or substance, the liquid including separated solid particles is discharged from the metering chamber (16).

7. Method according to claim 5 or 6,
**characterized in that** the discharge chamber (11) and the metering chamber (16) are flushed with a flushing agent at regular intervals via the feed line (17) opening into the metering chamber (16).

## Revendications

1. Installation de filtrage pour liquides de nettoyage, avec une unité de préfiltrage (2) pour la séparation des particules du liquide et avec une unité de décharge (3) montée en aval de l'unité de préfiltrage (2) pour le stockage intermédiaire et la décharge des particules, l'unité de décharge (3) présentant une chambre de décharge (11) qui est séparée de l'unité de préfiltrage (2) au moyen d'une soupape réglable (10),
**caractérisé en ce que** l'unité de décharge (3) présente une chambre de dosage (16) dans laquelle débouche une conduite d'alimentation (17) pour l'amenée d'un agent neutralisant, une soupape réglable (13) étant disposée entre la chambre de décharge (11) et la chambre de dosage (16), **en ce que** dans la conduite d'alimentation (17) qui débouche dans la chambre de dosage (16), une soupape de fermeture (18) est prévue pour l'introduction de l'agent neutralisant, **en ce que** les composants de l'unité de décharge (3) ont un revêtement pour réduire les adhérences telles que les sels, et qu'une unité de refroidissement (20) est associée au moins à la chambre de décharge (11).

2. Installation de filtrage selon la revendication 1,
**caractérisé en ce qu'**une soupage réglable (19) est raccordée en aval de la chambre de dosage (16).

3. Installation de filtrage selon la revendication 1 ou 2,
**caractérisé en ce qu'**une ou plusieurs soupages (13, 18) peuvent être commutées entre une position fermée et une position ouverte par l'intermédiaire d'un actionneur.

4. Installation de filtrage selon l'une quelconque des revendications 1 à 3,
**caractérisé en ce qu'**une soupape de sécurité (12) commutable manuellement est montée en amont de la soupape (13) entre la chambre de décharge (11) et la chambre de dosage (16).

5. Méthode d'exploitation de l'installation de filtrage selon l'une quelconque des revendications 1 à 4, dans lequel, lorsque la soupage (13) entre la chambre de décharge (11) et la chambre de dosage (16) est fermée, un agent de neutralisation est introduit dans la chambre de dosage et ensuite la soupage (13) entre la chambre de décharge (11) et la chambre de dosage (16) est ouverte pour conduire le liquide de la chambre de décharge (11) dans la chambre de dosage (16) et, par contact avec l'agent neutralisant, un gaz ou ou une substance dissoute dans le liquide par contact avec l'agent neutralisant.

6. Méthode selon la revendication 5,
**caractérisé en ce que**, après neutralisation du gaz ou de la substance, le liquide, y compris les particules solides séparées, est évacué de la chambre de dosage (16).

7. Méthode selon la revendication 5 ou 6,
**caractérisé en ce que** la chambre de décharge (11) et la chambre de dosage (16) sont rincées avec un agent de rinçage à intervalles réguliers par la conduite d'alimentation (17) débouchant dans la chambre de dosage (16).
